# FASCICULE DE BREVET EUROPEEN

(11) **EP 3 046 795 B1**
(45) Date de publication et mention de la délivrance du brevet: **08.11.2017**
(21) Numéro de dépôt: 14784288.4
(22) Date de dépôt: 12.09.2014
(51) Int. Cl.: B60K 11/08

(54) **DISPOSITIF DE REFROIDISSEMENT D'UNE STRUCTURE DE FACE AVANT TECHNIQUE DE VEHICULE AUTOMOBILE**
KÜHLVORRICHTUNG IN EINER FRONTENDSTRUKTUR EINES KRAFTFAHRZEUGS
COOLING DEVICE IN A FRONT END STRUCTURE OF A MOTOR VEHICLE

(30) Priorité: 20.09.2013 FR 1359060
(43) Date de publication de la demande: 27.07.2016
(73) Titulaire: Renault S.A.S., 92100 Boulogne-Billancourt (FR)
(72) Inventeur: FLANDIN, Michael, F-28410 Broue (FR); BERTHEVAS, Fabrice, F-91940 Gometz Le Chatel (FR)
(86) Numéro de dépôt international: PCT/FR2014/052274
(87) Numéro de publication internationale: WO 2015/040312

(56) Documents cités:
- EP-A1- 2 335 963
- EP-A2- 2 248 693
- FR-A1- 2 950 574
- FR-A1- 2 967 375
- FR-A1- 2 981 887

## Description

La présente invention concerne le domaine du refroidissement à guide d'air pour une face avant technique d'un véhicule automobile, et plus particulièrement les dispositifs pouvant incorporer un dispositif d'occultation à volets mobiles.

On appelle « face avant technique », toute structure se trouvant à l'avant du bloc moteur du véhicule automobile et ayant pour fonction de supporter différents organes, tel que notamment le radiateur du bloc moteur. La face avant technique peut être par exemple une simple poutre transversale ou un châssis de forme plus ou moins complexe intégrant la valise de refroidissement. La face avant technique intègre classiquement différentes fonctions telles que le support de butées de capot, le support de serrure de capot ou d'un jambage supportant la serrure de capot.

Le dispositif de refroidissement consiste à canaliser l'air pénétrant par au moins une ouverture ou grille d'aération dans la façade avant ou peau de bouclier avant du véhicule pour le conduire à un ensemble d'éléments regroupés dans une « valise de refroidissement ». Une valise de refroidissement désigne l'ensemble des éléments nécessaires au refroidissement du moteur, parfois empilés en couches ou en partie superposés. La valise de refroidissement comprend principalement un radiateur à eau de refroidissement du moteur, du condenseur et peut également comprendre le refroidissement du radiateur turbo.

On connait divers dispositifs de refroidissement comportant des volets mobiles, de type jalousie, à fermeture pilotée afin de gérer les émissions de dioxyde de carbone. En effet, il est connu que les entrées d'air sur un bouclier avant d'un véhicule automobile dégradent le coefficient de traînée aérodynamique et augmentent donc les émissions de dioxyde de carbone du véhicule automobile.

Le positionnement de volets mobiles sur le circuit d'air du véhicule automobile est particulièrement difficile à réaliser, dans la mesure où le compartiment avant du véhicule est compact et est soumis à de nombreuses exigences, telles que notamment en matière de chocs, par exemple avec un piéton. Ainsi, un volet mobile placé dans ou à proximité de la grille d'entrée d'air risque d'être abimé au moindre choc, engendrant des coûts de réparation importants. Un volet mobile intégré à la face avant du véhicule pose des problèmes de fragilité et se prête difficilement à la construction standardisée pour différents modèles de véhicules automobiles.

On connaît du document EP 2 080 658 un dispositif de refroidissement de radiateur, destiné à être monté à l'avant d'un véhicule automobile entre un radiateur et un bouclier avant muni d'une entrée d'air. Le dispositif de refroidissement comporte un guide d'air fixé à la structure du véhicule automobile et logeant des volets d'occultation de l'air arrivant sur le radiateur. Le guide d'air et ses moyens d'occultation sont adaptés pour participer à l'absorption de l'énergie en cas de choc. Le dispositif d'occultation est intégré dans les parois du guide d'air qui prend appui contre l'intérieur du bouclier avant et comporte des surfaces destinées à s'appuyer en cas de choc à l'avant et au-dessus de la traverse transversale du véhicule automobile. Toutefois, une telle construction présente l'inconvénient d'être spécifiquement liée à chaque modèle de véhicule automobile et expose les volets d'occultation à tous les chocs, y compris à faible vitesse.

Le document FR 2 967 375, qui sert de base pour la présentation en deux parties de la revendication 1 et de la revendication 9, propose un dispositif de refroidissement de radiateur comprenant entre l'entrée d'air et le véhicule, un guide d'air fixé à la face avant technique du véhicule automobile et, optionnellement, un dispositif à volets mobiles d'occultation de l'air arrivant sur le radiateur. Le guide d'air comprend une partie avant et une partie arrière fixées entre elles et entre lesquelles est emprisonné le dispositif à volets mobiles. La partie avant du guide d'air est assemblée à la partie arrière en présence ou non du dispositif à volets mobiles.

Toutefois, un tel dispositif est difficilement inséré dans le compartiment moteur dans les modèles de véhicules automobiles comportant un volume de moteur important.

L'invention a donc pour but de proposer un dispositif de refroidissement d'une structure de face avant technique amélioré, dans lequel le guide d'air est facilement adaptable à divers modèles de véhicule automobile.

Un autre but de l'invention est de proposer un dispositif de refroidissement d'une structure de face avant technique particulièrement compact.

L'invention a pour objet un dispositif de refroidissement d'une structure de face avant technique, destiné à être monté à l'avant d'un véhicule automobile entre un radiateur et un bouclier avant muni d'au moins une entrée d'air, le dispositif de refroidissement comportant entre ladite entrée d'air et le radiateur, un dispositif de guide d'air comportant une partie avant et une partie arrière fixée à la structure du véhicule automobile et comprenant chacune au moins une entrée d'air se faisant face et faisant face à l'entrée d'air du bouclier avant, et une cassette disposée entre lesdites parties avant et arrière.

La cassette est fixée directement sur la partie arrière du dispositif de guide d'air par des moyens de fixation et la partie avant du dispositif de guide d'air est emboîtée sur la cassette et fixée sur la partie arrière du dispositif de guide d'air par un dispositif de fixation.

Avantageusement, la partie avant du dispositif de guide d'air comprend une lèvre d'étanchéité disposée en continu sur la périphérie de l'entrée d'air de la partie avant, la lèvre d'étanchéité étant adaptée pour coopérer avec la cassette.

La partie avant est, par exemple, une pièce unique réalisée par bi-injection de matière synthétique.

Dans un mode de réalisation, la partie avant du dispositif de guide d'air est fixée à la partie arrière par ses deux extrémités latérales.

Avantageusement, la partie avant comprend des pattes de fixation s'étendant axialement à partir de chaque extrémité latérale de la partie avant vers la partie arrière, chaque patte de fixation comprenant un moyen de mise en position et un moyen de maintien en position de la partie avant sur la partie arrière.

Les moyens de fixation de la cassette sur la partie arrière du dispositif de guide d'air comprennent, par exemple, des moyens de visseries ou des moyens de clipage.

Dans un mode de réalisation, la cassette comprend des volets d'occultation mobiles commandés.

Dans un autre mode de réalisation, la cassette est sous la forme d'une entretoise ajourée.

Selon un second aspect, l'invention concerne un procédé d'assemblage d'un dispositif de refroidissement d'une structure de face avant technique destiné à être monté à l'avant d'un véhicule automobile entre un radiateur et un bouclier avant muni d'au moins une entrée d'air, le dispositif de refroidissement comportant entre ladite entrée d'air et le radiateur, un dispositif de guide d'air comportant une partie avant et une partie arrière fixée à la structure du véhicule automobile et comprenant chacune au moins une entrée d'air se faisant face et faisant face à l'entrée d'air du bouclier avant, et une cassette disposée entre lesdites parties avant et arrière. En vue de l'assemblage, on fixe la cassette directement sur la partie arrière du dispositif de guide d'air par des moyens de fixation, on emboîte la partie avant du dispositif de guide d'air sur la cassette puis l'on fixe la partie avant sur la partie arrière par un dispositif de fixation.

Avantageusement, afin de fixer la partie avant sur la partie arrière par un dispositif de fixation, on positionne des pattes de fixation s'étendant axialement à partir de chaque extrémité latérale de la partie avant sur la partie arrière et on maintient en position lesdites pattes de fixation.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre, de manière schématique, une vue éclatée en perspective d'un dispositif de refroidissement selon un premier mode de réalisation de l'invention ;
- la figure 2 illustre, de manière schématique, une vue éclatée en perspective d'un dispositif de refroidissement selon un deuxième mode de réalisation de l'invention ;
- la figure 3 illustre, en perspective, une vue de derrière d'une partie avant d'un dispositif de guide d'air selon les figures 1 ou 2 ;
- la figure 4 illustre une vue coupe selon le plan XZ d'une partie du dispositif de refroidissement selon la figure 1 ; et
- la figure 5 illustre un détail du dispositif de fixation de la partie avant sur la partie arrière du dispositif de guide d'air selon l'invention.

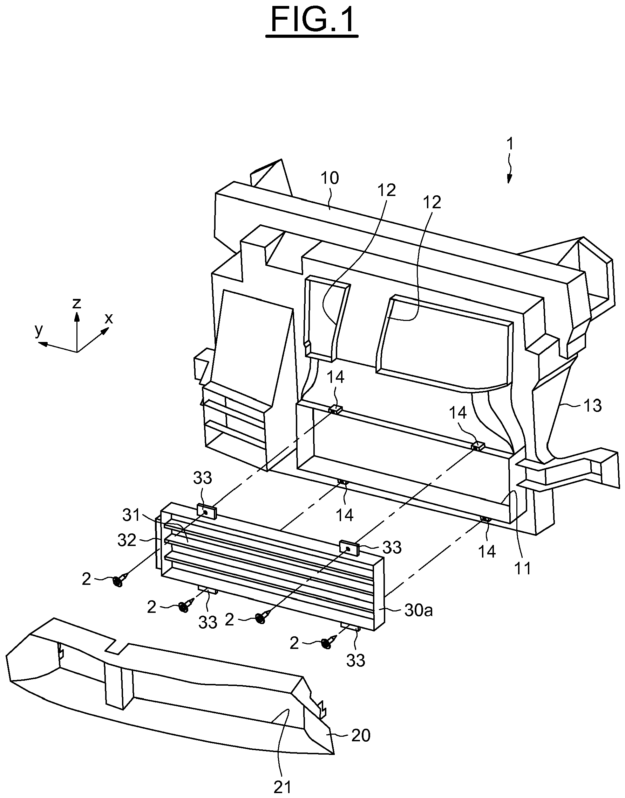

Tel qu'illustré sur la figure 1, un dispositif de refroidissement d'une structure de face avant technique, référencé 1 dans son ensemble, est destiné à être monté à l'avant d'un véhicule automobile (non représenté) entre un radiateur (non représenté) et un bouclier avant (non représenté) muni de deux entrées d'air. On pourrait prévoir que le bouclier avant ne comporte qu'une entrée d'air ou un nombre d'entrées d'air supérieur à deux. Le bouclier avant peut être défini comme une partie avant de la carrosserie du véhicule automobile, disposée en dessous de la traverse de pare-chocs, et généralement réalisée en matériau synthétique.

Le dispositif de refroidissement 1 comporte entre l'entrée d'air du bouclier avant et le radiateur, un dispositif de guide d'air comportant une partie arrière 10 fixée à la structure du véhicule automobile et une partie avant 20 en amont de la partie arrière 10, afin de diriger l'air de refroidissement vers le radiateur.

La partie arrière 10 du dispositif de guide d'air comprend une partie de passage inférieure 11, une partie de passage supérieure 12 respectivement en face de chacune des entrées d'air du bouclier avant et qui débouchent toutes deux en aval dans une partie de collecteur commun 13 faisant face au radiateur.

Telle qu'illustrée, la partie arrière 10 est réalisée sous la forme d'une unique pièce formant une face avant technique capable de supporter un certain nombre d'organes et fixée solidement sur la structure du châssis, notamment sur des pièces liées aux longerons latéraux du véhicule automobile (non représentés). Ainsi, le dispositif de refroidissement 1 est particulièrement compact puisque la face avant technique et la partie arrière du dispositif de guide d'air ne forment plus qu'une unique pièce.

La partie avant 20 du dispositif de guide d'air est disposée en amont de la partie arrière 10 et comprend une entrée d'air 21 faisant face à la partie de passage inférieure 11 de la partie arrière 10, afin de confiner l'air de manière sensiblement étanche entre les entrées d'air du bouclier avant et la partie arrière 10.

Le dispositif de refroidissement comprend une cassette 30a destinée à être fixée directement sur la partie arrière 10 du dispositif de guide d'air, notamment au niveau de la partie de passage inférieure 11 afin de faire face à l'entrée d'air de la partie avant 20 du dispositif de guide d'air. La cassette 30a comprend, par exemple, des volets d'occultation mobiles 31 tels que visibles sur la figure 1, commandés par un dispositif latéral de commande 32 alimenté par un câble (non représenté). Telle qu'illustrée, la cassette 30a est fixée à la partie arrière 10, notamment à la partie inférieure 11 par des moyens de fixation, tels que, par exemple des moyens de visseries. Ces moyens de visseries peuvent être, par exemple, des vis auto-taraudantes de fixation 2 au nombre de quatre, passant par des pattes de fixation 33 de la cassette 30a et destinées à venir se visser dans des fûts correspondants 14 réalisés sur la surface extérieure de la partie arrière 10. Les fûts 14 peuvent être réalisés en matériau tendre et sont situés autour de la partie de passage inférieure 11.

En variante, on pourrait prévoir des moyens de clipage (non représentés) afin de fixer la cassette 30a sur la partie arrière 10 du dispositif de guide d'air.

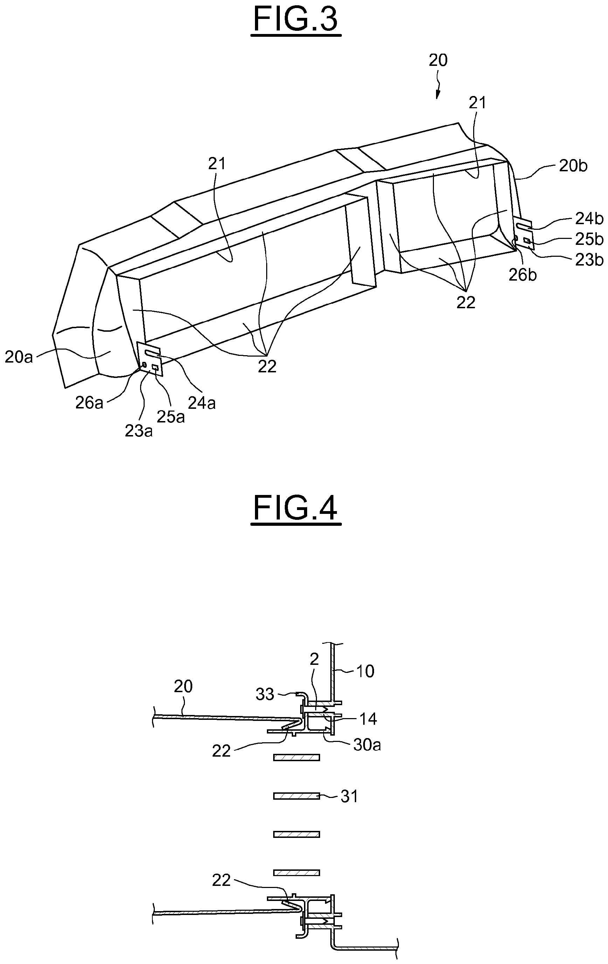

La partie avant 20 du dispositif de guide d'air est destinée à être emboîtée sur la cassette 30a, par l'intermédiaire de lèvres d'étanchéité 22 visibles en détails sur la figure 3 et disposées en continu sur la périphérie de l'entrée d'air 21 de la partie avant 20. Ainsi, les lèvres d'étanchéité 22 permettent d'entourer la cassette 30a afin d'assurer l'étanchéité de l'air entre l'entrée d'air du bouclier avant et la partie arrière 10 du guide d'air.

On notera qu'à titre d'exemple non limitatif, d'autres entrées d'air respectivement sur la partie arrière 10 et sur la partie avant 20 du dispositif de guide d'air ont été représentées sur les figures. Il peut en effet être nécessaire, dans certains cas, de conserver des ouvertures permanentes pour assurer qu'un flux d'air minimal arrive à l'admission du moteur. Toutefois, on pourrait prévoir que la partie arrière 10 et la partie avant 20 du dispositif de guide d'air comprennent respectivement une unique entrée d'air faisant face à une unique entrée d'air du bouclier avant.

La partie avant 20 du dispositif de guide d'air est réalisée sous la forme d'une pièce unique en matière plastique en bi-injection, c'est-à-dire que les lèvres d'étanchéité périphériques 22 sont réalisées en matières plus souple que le reste de la partie avant 20.

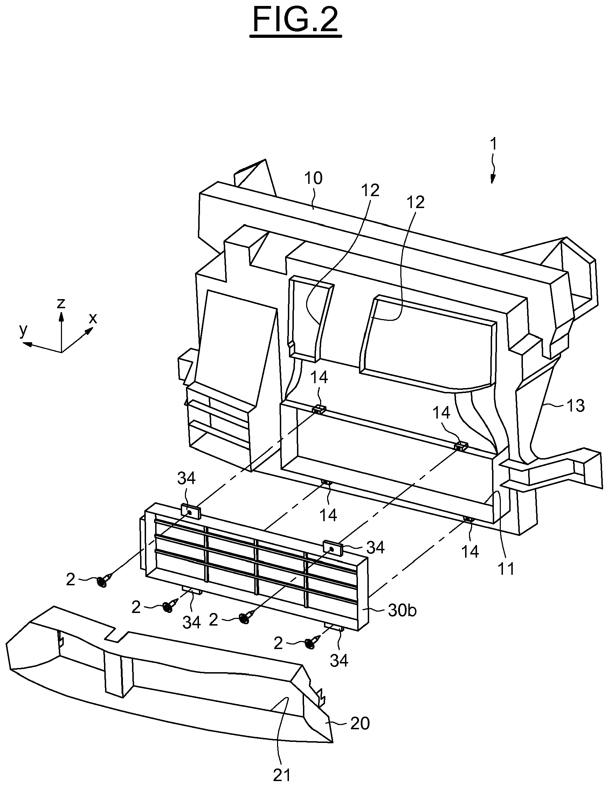

Le mode de réalisation illustré sur la figure 2, dans lequel les mêmes éléments ont les mêmes références, diffère du mode de réalisation illustré sur la figure 1 par la forme de la cassette.

Telle qu'illustrée sur la figure 2, la cassette 30b est sous la forme d'une entretoise ajourée et est fixée à la partie arrière 10, notamment à la partie inférieure 11 par des moyens de fixation, tels que, par exemple des vis auto-taraudantes de fixation 2 au nombre de quatre, passant par des pattes de fixation 34 de la cassette 30b et destinées à venir se visser dans des fûts correspondants 14 réalisés sur la surface extérieure de la partie arrière 10. Les fûts 14 peuvent être réalisés en matériau tendre et sont situés autour de la partie de passage inférieure 11. En variante, on pourrait prévoir des moyens de clipage (non représentés) afin de fixer la cassette 30b sur la partie arrière 10 du dispositif de guide d'air.

En effet, selon les législations dans différents pays, il est possible ou non de disposer de volets d'occultation pilotés afin de réduire les émissions de dioxyde de carbone. Toutefois, il est nécessaire de fixer la cassette 30a, 30b sur la partie arrière 10 du dispositif de guide d'air afin de venir fixer la partie avant 20 du dispositif de guide d'air sur la partie arrière 10.

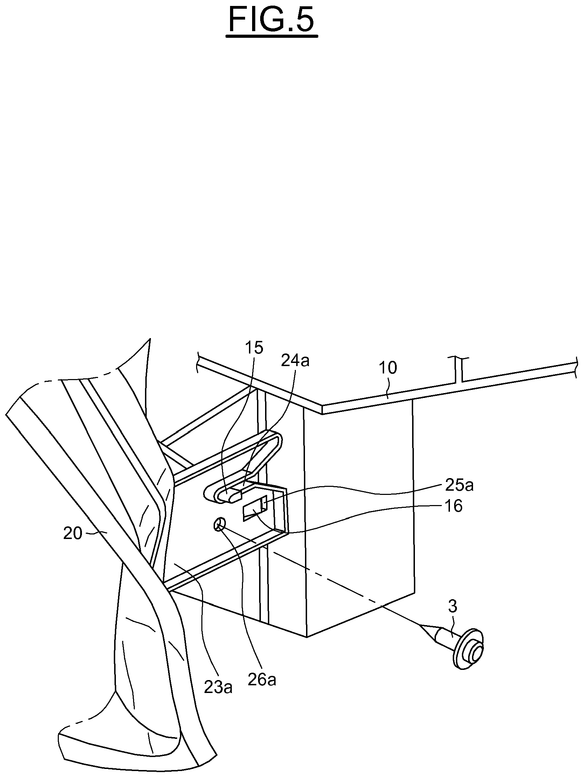

Telle qu'illustrée sur la figure 3, chaque extrémité latérale 20a, 20b de la partie avant 20 comporte une patte de fixation 23a, 23b s'étendant axialement à partir de la partie avant 20 vers la partie arrière 10. Chaque patte de fixation 23a, 23b comprend un moyen de mise en position 24a, 24b de la partie avant 20 sur la partie arrière 10, tel que par exemple une encoche 24a, 24b pratiquée sur la patte de fixation 23a, 23b coopérant chacune avec un premier ergot 15 en saillie transversale de la partie arrière 10 vers l'extérieur, visible en détail sur la figure 5. Chaque patte de fixation 23a, 23b comprend également un moyen de maintien en position 25a, 25b de la partie avant 20 sur la partie arrière 10, tel que par exemple un perçage 25a, 25b pratiqué sur la patte de fixation 23a, 23b coopérant avec un deuxième ergot 16 en saillie transversale de la partie arrière 10, visible sur la figure 5. L'ensemble formé par les pattes de fixation 23a, 23b de la partie avant 20 et les ergots 14, 15 en saillie de la partie arrière 10 forme le dispositif de fixation de la partie avant 20 sur la partie arrière 10.

Tel qu'illustrée la patte de fixation 23a, 23b est fixée par une vis de fixation 3 sur la partie arrière 10 du dispositif de guide d'air, destinée à s'insérer dans un perçage 26a, 26b pratiqué sur la patte de fixation 23a, 23b correspondante et à se visser dans la partie arrière 10. En variante, on pourrait se limiter au moyen de mise en position 24a, 24b et au moyen de maintien en position 25a, 25b afin d'assurer la fixation de la partie avant 20 sur la partie arrière 10.

Afin d'assembler le dispositif de refroidissement 1 illustré sur les figures, on fixe la cassette 30a ou 30b directement sur la partie arrière 10 du dispositif de guide d'air, notamment sur la partie de passage inférieure 11 de la partie arrière 10 en insérant les quatre vis auto-taraudantes de fixation 2 dans les pattes de fixation 33, 34 de la cassette 30a, 30b correspondante et en les vissant dans les fûts correspondants 14 réalisés sur la partie arrière 10.

Ensuite, on emboîte la partie avant 20 du dispositif de guide d'air sur la cassette 30a, 30b, grâce aux lèvres d'étanchéité périphériques 22 de la partie avant 20.

Enfin, on fixe la partie avant 20 du dispositif de guide d'air sur la partie arrière 10 par un dispositif de fixation, dans lequel on positionne les pattes de fixation 23a, 23b de manière à ce que l'encoche 24a, 24b de mise en position coopère avec le premier ergot 15 de la partie arrière 10 et à ce que le perçage 25a, 25b de maintien en position pratiqué sur la patte de fixation 23a, 23b vienne s'encliqueter sur le deuxième ergot 16 de la partie arrière 10.

Afin d'assurer une sécurité supplémentaire, on fixe lesdites pattes de fixation 23a, 23b sur la partie arrière 10 du dispositif de guide d'air par deux vis transversales 3.

On obtient ainsi une partie avant 20 du dispositif de guide d'air fixée exclusivement sur la partie arrière 10.

Grace à l'invention, on obtient un dispositif de refroidissement d'une structure de face avant technique particulièrement compact.

## Revendications

1. Dispositif de refroidissement d'une structure de face avant technique, destiné à être monté à l'avant d'un véhicule automobile entre un radiateur et un bouclier avant muni d'au moins une entrée d'air, le dispositif de refroidissement comportant entre ladite entrée d'air et le radiateur, un dispositif de guide d'air comportant une partie avant (20) et une partie arrière (10) fixée à la structure du véhicule automobile et comprenant chacune au moins une entrée d'air se faisant face (11, 21) et faisant face à l'entrée d'air du bouclier avant, et une cassette (30a, 30b) disposée entre lesdites parties avant et arrière (10, 20), **caractérisé en ce que** la cassette (30a, 30b) est fixée directement sur la partie arrière (10) du dispositif de guide d'air par des moyens de fixation (2, 33, 34, 14) et **en ce que** la partie avant (20) du dispositif de guide d'air est emboîtée sur la cassette (30a, 30b) et fixée sur la partie arrière (10) du dispositif de guide d'air par un dispositif de fixation (23a, 23b, 15, 16).

2. Dispositif de refroidissement selon la revendication 1, dans lequel la partie avant (20) du dispositif de guide d'air comprend une lèvre d'étanchéité (22) disposée en continu sur la périphérie de l'entrée d'air (21) de la partie avant (20), la lèvre d'étanchéité (22) étant adaptée pour coopérer avec la cassette (30a, 30b).

3. Dispositif de refroidissement selon la revendication 2, dans lequel la partie avant (20) est une pièce unique réalisée par bi-injection de matière synthétique.

4. Dispositif de refroidissement selon l'une quelconque des revendications 1 à 3, dans lequel la partie avant (20) du dispositif de guide d'air est fixée à la partie arrière (10) par ses deux extrémités latérales (20a, 20b).

5. Dispositif de refroidissement selon la revendication 4, dans lequel la partie avant (20) comprend des pattes de fixation (23a, 23b) s'étendant axialement à partir de chaque extrémité latérale (20a, 20b) de la partie avant (20) vers la partie arrière (10), chaque patte de fixation (23a, 23b) comprenant un moyen de mise en position (24a, 24b) et un moyen de maintien en position (25a, 25b) de la partie avant (20) sur la partie arrière (10).

6. Dispositif de refroidissement selon l'une quelconque des revendications précédentes, dans lequel les moyens de fixation de la cassette (30a, 30b) sur la partie arrière (10) du dispositif de guide d'air comprennent des moyens de visseries (2, 14) ou des moyens de clipage.

7. Dispositif de refroidissement selon l'une quelconque des revendications précédentes, dans lequel la cassette (30a) comprend des volets d'occultation mobiles (31) commandés.

8. Dispositif de refroidissement selon l'une quelconque des revendications 1 à 6, dans lequel la cassette (30b) est sous la forme d'une entretoise ajourée.

9. Procédé d'assemblage d'un dispositif de refroidissement (1) d'une structure de face avant technique destiné à être monté à l'avant d'un véhicule automobile entre un radiateur et un bouclier avant muni d'au moins une entrée d'air, le dispositif de refroidissement comportant entre ladite entrée d'air et le radiateur, un dispositif de guide d'air comportant une partie avant (20) et une partie arrière (10) fixée à la structure du véhicule automobile et comprenant chacune au moins une entrée d'air se faisant face (11, 21) et faisant face à l'entrée d'air du bouclier avant, et une cassette (30a, 30b) disposée entre lesdites parties avant et arrière (10, 20), **caractérisé en ce que** l'on fixe la cassette (30a, 30b) directement sur la partie arrière (10) du dispositif de guide d'air par des moyens de fixation (2, 33, 14) et **en ce que** l'on emboîte la partie avant (20) du dispositif de guide d'air sur la cassette (30a, 30b) puis l'on fixe la partie avant (20) sur la partie arrière (10) par un dispositif de fixation (23a, 23b, 15, 16).

10. Procédé d'assemblage selon la revendication 9, dans lequel on positionne des pattes de fixation (23a, 23b) s'étendant axialement à partir de chaque extrémité latérale (20a, 20b) de la partie avant (20) sur la partie arrière (10) et on maintient en position lesdites pattes de fixation (23a, 23b).

## Patentansprüche

1. Kühlvorrichtung einer Frontendstruktur, die dazu bestimmt ist, an der Vorderseite eines Kraftfahrzeugs zwischen einem Kühler und einem vorderen Stoßfänger montiert zu werden, der mit mindestens einem Lufteinlass versehen ist, wobei die Kühlvorrichtung zwischen dem Lufteinlass und dem Kühler eine Luftführungsvorrichtung, die einen vorderen Teil (20) und einen an der Struktur des Kraftfahrzeugs befestigten hinteren Teil (10) aufweist, die je mindestens einen Lufteinlass enthalten, die einander gegenüberliegen (11, 21) und dem Lufteinlass des vorderen Stoßfängers gegenüberliegen, und eine Kassette (30a, 30b) aufweist, die zwischen dem vorderen und dem hinteren Teil (10, 20) angeordnet ist, **dadurch gekennzeichnet, dass** die Kassette (30a, 30b) durch Befestigungseinrichtungen (2, 33, 34, 14) direkt am hinteren Teil (10) der Luftführungsvorrichtung befestigt wird, und dass der vordere Teil (20) der Luftführungsvorrichtung auf die Kassette (30a, 30b) aufgeschoben und durch eine Befestigungsvorrichtung (23a, 23b, 15, 16) am hinteren Teil (10) der Luftführungsvorrichtung befestigt wird.

2. Kühlvorrichtung nach Anspruch 1, wobei der vordere Teil (20) der Luftführungsvorrichtung eine Dichtlippe (22) enthält, die durchgehend am Umfang des Lufteinlasses (21) des vorderen Teils (20) angeordnet ist, wobei die Dichtlippe (22) geeignet ist, mit der Kassette (30a, 30b) zusammenzuwirken.

3. Kühlvorrichtung nach Anspruch 2, wobei der vordere Teil (20) ein einziges Bauteil ist, das durch BiInjektion von Kunststoff hergestellt wird.

4. Kühlvorrichtung nach einem der Ansprüche 1 bis 3, wobei der vordere Teil (20) der Luftführungsvorrichtung durch seine zwei seitlichen Enden (20a, 20b) am hinteren Teil (10) befestigt ist.

5. Kühlvorrichtung nach Anspruch 4, wobei der vordere Teil (20) Befestigungslaschen (23a, 23b) enthält, die sich axial ausgehend von jedem seitlichen Ende (20a, 20b) des vorderen Teils (20) zum hinteren Teil (10) erstrecken, wobei jede Befestigungslasche (23a, 23b) eine Positioniereinrichtung (24a, 24b) und eine Positionshalteeinrichtung (25a, 25b) des vorderen Teils (20) am hinteren Teil (10) enthält.

6. Kühlvorrichtung nach einem der vorhergehenden Ansprüche, wobei die Befestigungseinrichtungen der Kassette (30a, 30b) am hinteren Teil (10) der Luftführungsvorrichtung Schraubeinrichtungen (2, 14) oder Klippeinrichtungen enthalten.

7. Kühlvorrichtung nach einem der vorhergehenden Ansprüche, wobei die Kassette (30a) gesteuerte bewegliche Abdeckklappen (31) enthält.

8. Kühlvorrichtung nach einem der Ansprüche 1 bis 6, wobei die Kassette (30b) in Form eines gelochten Abstandshalters vorliegt.

9. Verfahren zum Zusammenbau einer Kühlvorrichtung (1) einer Frontendstruktur, die dazu bestimmt ist, an der Vorderseite eines Kraftfahrzeugs zwischen einem Kühler und einem vorderen Stoßfänger montiert zu werden, der mit mindestens einem Lufteinlass versehen ist, wobei die Kühlvorrichtung zwischen dem Lufteinlass und dem Kühler eine Luftführungsvorrichtung, die einen vorderen Teil (20) und einen an der Struktur des Kraftfahrzeugs befestigten hinteren Teil (10) aufweist, und die je mindestens einen Lufteinlass enthalten, die einander gegenüberliegen (11, 21) und dem Lufteinlass des vorderen Stoßfängers gegenüberliegen, und eine Kassette (30a, 30b) aufweist, die zwischen dem vorderen und dem hinteren Teil (10, 20) angeordnet ist, **dadurch gekennzeichnet, dass** die Kassette (30a, 30b) durch Befestigungseinrichtungen (2, 33, 14) direkt am hinteren Teil (10) der Luftführungsvorrichtung befestigt wird, und dass der vordere Teil (20) der Luftführungsvorrichtung auf die Kassette (30a, 30b) aufgeschoben und dann der vordere Teil (20) durch eine Befestigungsvorrichtung (23a, 23b, 15, 16) am hinteren Teil (10) befestigt wird.

10. Zusammenbauverfahren nach Anspruch 9, wobei Befestigungslaschen (23a, 23b), die sich axial ausgehend von jedem seitlichen Ende (20a, 20b) des vorderen Teils (20) erstrecken, auf dem hinteren Teil (10) positioniert und die Befestigungslaschen (23a, 23b) in Position gehalten werden.

## Claims

1. Cooling device for a technical front-end structure, intended to be mounted at the front of a motor vehicle between a radiator and a front bumper provided with at least one air inlet, the cooling device comprising, between said air inlet and the radiator, an air guide device comprising a front part (20) and a rear part (10) fixed to the structure of the motor vehicle and each comprising at least one air inlet facing one another (11, 21) and facing the air inlet of the front bumper, and a cassette (30a, 30b) positioned between said front and rear parts (10, 20), **characterized in that** the cassette (30a, 30b) is fixed directly onto the rear part (10) of the air guide device by fixing means (2, 33, 34, 14) and **in that** the front part (20) of the air guide device is fitted over the cassette (30a, 30b) and fixed onto the rear part (10) of the air guide device by a fixing device (23a, 23b, 15, 16).

2. Cooling device according to Claim 1, in which the front part (20) of the air guide device comprises a sealing lip (22) arranged continuously over the periphery of the air inlet (21) of the front part (20), the sealing lip (22) being adapted to cooperate with the cassette (30a, 30b).

3. Cooling device according to Claim 2, in which the front part (20) is a single piece produced by bi-injection of synthetic material.

4. Cooling device according to any one of Claims 1 to 3, in which the front part (20) of the air guide device is fixed to the rear part (10) by its two lateral ends (20a, 20b).

5. Cooling device according to Claim 4, in which the front part (20) comprises fixing tabs (23a, 23b) extending axially from each lateral end (20a, 20b) of the front part (20) toward the rear part (10), each fixing tab (23a, 23b) comprising a positioning means (24a, 24b) and a means (25a, 25b) for holding the front part (20) in position on the rear part (10).

6. Cooling device according to any one of the preceding claims, in which the means for fixing the cassette (30a, 30b) onto the rear part (10) of the air guide device comprise screw-fastening means (2, 14) or clipping means.

7. Cooling device according to any one of the preceding claims, in which the cassette (30a) comprises controlled mobile blocking shutters (31).

8. Cooling device according to any one of Claims 1 to 6, in which the cassette (30b) is in the form of an openwork spacer.

9. Method for assembling a cooling device (1) for a technical front-end structure intended to be mounted at the front of a motor vehicle between a radiator and a front bumper provided with at least one air inlet, the cooling device comprising, between said air inlet and the radiator, an air guide device comprising a front part (20) and a rear part (10) fixed to the structure of the motor vehicle and each comprising at least one air inlet facing one another (11, 21) and facing the air inlet of the front bumper, and a cassette (30a, 30b) positioned between said front and rear parts (10, 20), **characterized in that** the cassette (30a, 30b) is fixed directly onto the rear part (10) of the air guide device by fixing means (2, 33, 14) and **in that** the front part (20) of the air guide device is fitted over the cassette (30a, 30b), then the front part (20) is fixed onto the rear part (10) by a fixing device (23a, 23b, 15, 16).

10. Assembly method according to Claim 9, in which fixing tabs (23a, 23b) extending axially from each lateral end (20a, 20b) of the front part (20) are positioned on the rear part (10) and said fixing tabs (23a, 23b) are held in position.
